# EUROPEAN PATENT APPLICATION

(11) **EP 1 892 484 A1**
(43) Date of publication of application: **27.02.2008**
(21) Application number: 06254389.7
(22) Date of filing: 22.08.2006
(51) Int. Cl.: F24F 5/00, F25B 21/04

(54) **Air cooling/heating device**

(71) Applicant: Luo, Chin-Kuang, Taichung City (TW)
(72) Inventor: Luo, Chin-Kuang, Taichung City (TW)
(74) Representative: Price, Paul Anthony King

(57) **Abstract**

An air cooling/heating device includes: a housing unit (1) having first and second compartments (12, 13), formed with a first opening (111) and a first mounting hole (112) in spatial communication with the first compartment (12), and further formed with a second opening unit (113) and a second mounting hole (114) in spatial communication with the second compartment (13) ; a thermal energy storing unit (3) and a pipe (41) disposed in the first compartment (12), and adapted to contain antifreeze liquid; a pump (5) connected in series to the pipe (41), and operable to deliver the antifreeze liquid between the thermal energy storing unit (3) and the pipe (41) ; a thermoelectric semiconductor device (6) disposed in the second compartment (13), and in thermal contact with the thermal energy storing unit (3) ; and a turbulence unit (8) including first and second fans (81, 82) that are mounted in the first and second mounting holes (12, 13) in the housing body (1), respectively.

## Description

The invention relates to an air cooling/heating device .

Air heaters for generating hot air currents, and air coolers for generating cool air currents are known in the art. In the prior art, the output power of the air heaters/coolers affects the size and power consumption of the same. That is, air heaters/coolers with large power outputs are generally bulky, consume large amounts of electricity, and are expensive. It is thus desirable to provide an air cooling/heating device that can provide a large power output while having a compact size and consuming a smaller amount of electricity to reduce manufacturing and operating costs.

Therefore, the object of the present invention is to provide a simple and cost-effective air cooling/heating device.

According to the present invention, there is provided an air cooling/heating device that includes a housing unit, a thermal energy storing unit, an energy exchange unit, a pump, a thermoelectric semiconductor device, and a turbulence unit.

The housing unit includes a housing body, andapartition plate disposed in and connected to the housing body such that the partition plate divides an interior of the housing body into first and second compartments. The housing body is formed with a first opening and a first mounting hole in spatial communication with the first compartment. The housing body is further formed with a second opening unit and a second mounting hole in spatial communication with the second compartment.

The thermal energy storing unit is mounted to the partition plate of the housing unit, is disposed in the first compartment, and is adapted to contain antifreeze liquid.

The energy exchange unit is disposed in the first compartment, and includes a pipe that is connected to the thermal energy storing unit to form a closed loop therewith.

The pump is connected in series to the pipe of the energy exchange unit, and is operable to deliver the antifreeze liquid contained in the thermal energy storing unit to the energy exchange unit and to return the antifreeze liquid in the energy exchange unit back to the thermal energy storing unit.

The thermoelectric semiconductor device is disposed in the second compartment, and is in thermal contact with the thermal energy storing unit.

The turbulence unit includes first and second fans mounted in the first and second mounting holes in the housing body, respectively.

Other features and advantages of the present invention will become apparent in the following detailed description of the preferred embodiment with reference to the accompanying drawings, of which:
FIG.1 is an assembled schematic partly sectional view of the preferred embodiment of an air cooling/heating device according to the present invention; and
FIG.2 is an electric circuit diagram of a power supply unit according to the preferred embodiment.

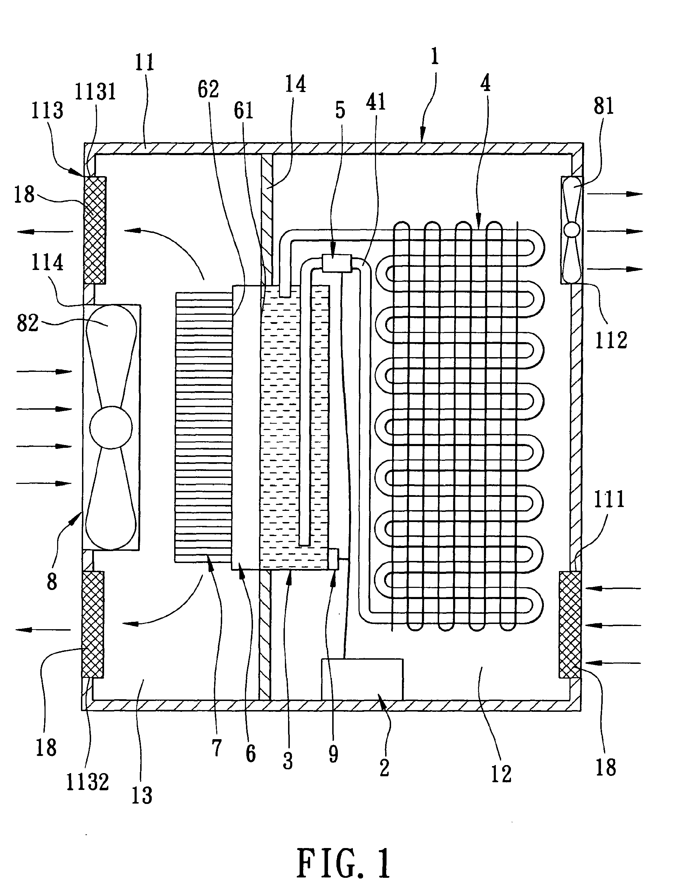

As shown in FIG.1, the preferred embodiment of an air cooling/heating device according to the present invention includes a housing unit 1, a thermal energy storing unit 3, an energy exchange unit 4, a pump 5, a thermoelectric semiconductor device 6, a heat guide 7, a turbulence unit 8, and a power supply unit 2.

The housing unit 1 includes a housing body 11, and a partition plate 14 disposed in and connected to the housing body 11 such that the partition plate 14 divides an interior of the housing body 11 into first and second compartments 12, 13. The housing body 11 is formed with a first opening 111 and a first mounting hole 112 in spatial communication with the first compartment 12. The housing body 11 is further formed with a second opening unit 113 and a second mounting hole 114 in spatial communication with the second compartment 13. In this embodiment, the second opening unit 113 includes second and third openings 1131, 1132. The second mounting hole 114 is disposed between the second and third openings 1131, 1132. The housing unit 1 further includes several air filters 18 that are disposed to cover the first, second and third openings 111, 1131, 1132, respectively.

The thermal energy storing unit 3 is mounted to the partition plate 14 of the housing unit 1, is disposed in the first compartment 12, and is adapted to contain antifreeze liquid. In this embodiment, the thermal energy storing unit 3 is embedded in the partition plate 14 of the housing unit 1, and the antifreeze liquid is water mixed with ethylene glycol.

The energy exchange unit 4 is disposed in the first compartment 12, and includes a meandering pipe 41 that is connected to the thermal energy storing unit 3 to form a closed loop therewith.

The pump 5 is connected in series to the pipe 41 of the energy exchange unit 4, and is operable to deliver the antifreeze liquid contained in the thermal energy storing unit 3 to the energy exchange unit 4 and to return the antifreeze liquid in the energy exchange unit 4 back to the thermal energy storing unit 3.

The thermoelectric semiconductor device 6 is disposed in the second compartment 13, and has a first side 61 in thermal contact with the thermal energy storing unit 3. In this embodiment, the second mounting hole 114 is registered with the thermoelectric semiconductor device 6.

The heat guide 7 is disposed in the second compartment 13, and is fixed to a second side 62 of the thermoelectric semiconductor device 6 that is opposite to the first side 61. In this embodiment, the heat guide 7 is a comb-shaped heat sink.

The turbulence unit 8 includes first and second fans 81, 82 mounted in the first and second mounting holes 112, 114 in the housing body 11, respectively. The first fan 81 is operable to draw air out of the first compartment 12, and the second fan 82 is operable to draw air into the second compartment 13.

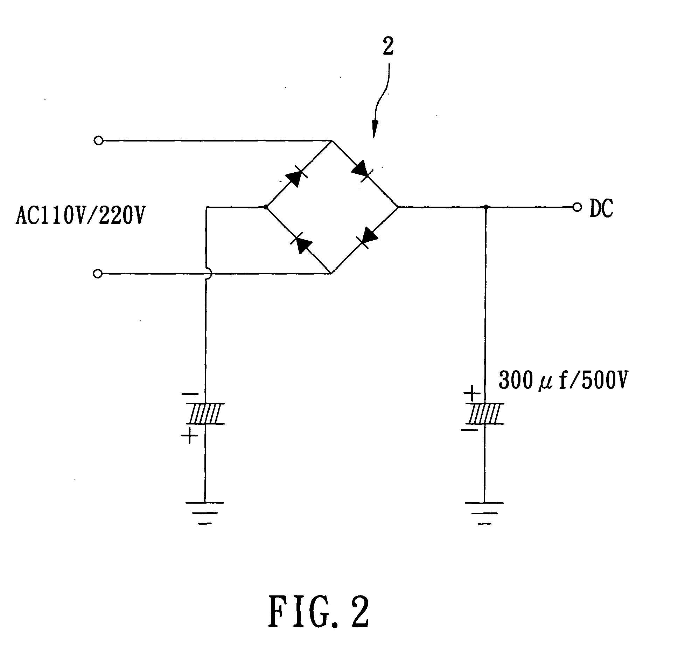

The power supply unit 2 is mounted in the housing unit 1, and is connected electrically to the pump 5. With further reference to FIG.2, the power supply unit 2 includes a high-voltage low-current circuit, and is responsible for supplying electric power to the various components of the device.

Preferably, a temperature monitoring unit 9 is attached to the thermal energy storing unit 3, is connected electrically to the power supply unit 2, and is used to monitor temperature of the antifreeze liquid in the thermal energy storing unit 3.

The thermoelectric semiconductor device 6 is operable to absorb heat at one of the first and second sides 61, 62, and to dissipate heat at the other one of the first and second sides 61, 62. In particular, when the air cooling/heating device is operated in a first mode, the first side 61 absorbs thermal energy, and the second side 62 dissipates thermal energy. On the other hand, when the air cooling/heating device is operated in a second mode, the second side 62 absorbs thermal energy, and the first side 61 dissipates thermal energy.

Take the air cooling/heating device working in the heating mode as an example for the following description on operating principles of the air cooling/heating device. With electrical power supplied by the power supply unit 2, the thermoelectric semiconductor device 6 is capable of producing a stable heat source at the first side 61 thereof such that the thermal energy storing unit 3 is maintained at a heated state. The pump 5 delivers the heated antifreeze liquid between the thermal energy storing unit 3 and the energy exchange unit 4 via the pipe 41 such that temperature of air in the first compartment 12 is increased by the heated antifreeze liquid. The heated air is drawn out of the first compartment 12 by the first fan 81 of the turbulence unit 8. As the first fan 81 draws the heated air out of the first compartment 12, air from outside of the air cooling/heating device is drawn into the first compartment 12 through the first opening 111 as a result of air circulation. On the other hand, the second side 62 of the thermoelectric semiconductor device 6 absorbs thermal energy via the heat guide 7 such that temperature of air in the second compartment 13 is decreased. As the second fan 82 of the turbulence unit 8 draws air fromoutside of the air cooling/heating device into the second compartment 13, the cooled air is drawn out of the second compartment 13 via the second and third openings 1131, 1132 as a result of air circulation. With air circulating as described, the air cooling/heating device is effectively operating as an air heater.

On the contrary, by reversing the electrical polarity of the thermoelectric semiconductor device 6 such that the first side 61 produces a cold source and the second side 62 dissipates thermal energy, the air cooling/heating device can effectively operate as an air cooler.

In view of the thermoelectric semiconductor device 6, the air cooling/heating device according to the present invention can provide a large power output while having a compact size and consuming a smaller amount of electricity to reduce manufacturing and operating costs.

## Claims

1. An air cooling/heating device, **characterized by**:
a housing unit (1) including a housing body (11), and a partition plate (14) disposed in and connected to said housing body (11) such that said partition plate (14) divides an interior of said housing body (11) into first and second compartments (12, 13), said housing body (11) being formed with a first opening (111) and a first mounting hole (112) in spatial communication with said first compartment (12), said housing body (11) being further formed with a second opening unit (113) and a second mounting hole (114) in spatial communication with said second compartment (13);
a thermal energy storing unit (3) mounted to said partition plate (14) of said housing unit (1), disposed in said first compartment (12), and adapted to contain antifreeze liquid;
an energy exchange unit (4) disposed in said first compartment (12), and including a pipe (41) that is connected to said thermal energy storing unit (3) to form a closed loop therewith;
a pump (5) connected in series to said pipe (41) of said energy exchange unit (4), and operable to deliver the antifreeze liquid contained in said thermal energy storing unit (3) to said energy exchange unit (4) and to return the antifreeze liquid in said energy exchange unit (4) back to said thermal energy storing unit (3);
a thermoelectric semiconductor device (6) disposed in said second compartment (13), and having a first side (61) in thermal contact with said thermal energy storing unit (3) ; and
a turbulence unit (8) including first and second fans (81, 82) mounted in said first and second mounting holes (112, 114) in said housing body (11), respectively.

2. The air cooling/heating device as claimed in Claim 1, further **characterized by** a power supply unit (2) mounted in said housing unit (1) and connected electrically to said pump (5).

3. The air cooling/heating device as claimed in Claim 1, further **characterized by** a heat guide (7) disposed in said second compartment (13), and fixed to a second side (62) of said thermoelectric semiconductor device (6).

4. The air cooling/heating device as claimed in Claim 3, **characterized in that** said heat guide (7) is a comb-shaped heat sink.

5. The air cooling/heating device as claimed in Claim 1, **characterized in that** said second mounting hole (114) is registered with said thermoelectric semiconductor device (6).

6. The air cooling/heating device as claimed in Claim 5, **characterized in that** said second opening unit (113) includes second and third openings (1131, 1132), and that said second mounting hole (114) is disposed between said second and third openings (1131, 1132).

7. The air cooling/heating device as claimed in Claim 1, **characterized in that** said first fan (81) is operable to draw air out of said first compartment (12), and that said second fan (82) is operable to draw air into said second compartment (13).

8. The air cooling/heating device as claimed in Claim 3, **characterized in that** said thermoelectric semiconductor device (6) is operable to absorb heat at one of said first and second sides (61, 62), and to dissipate heat at the other one of said first and second sides (61, 62).

9. The air cooling/heating device as claimed in Claim 1, **characterized in that** said thermal energy storing unit (3) is embedded in said partition plate (14) of said housing unit (1).
